# FASCICULE DE BREVET EUROPEEN

(11) **EP 0 559 567 B1**
(45) Date de publication et mention de la délivrance du brevet: **23.04.1997**
(21) Numéro de dépôt: 93400563.8
(22) Date de dépôt: 04.03.1993
(51) Int. Cl.: G02B 6/16, G02B 6/44, C03B 37/028

(54) **Procédés de fabrication d'un conducteur optique cylindrique multiguides pour câble de télécommunications**
Verfahren zur Herstellung eines zylindrischen optischen Vielfachleiters für Nachrichtenkabel
Methods of manufacturing a cylindrical multiguide optical conductor for telecommunications cable

(30) Priorité: 06.03.1992 FR 9202728
(43) Date de publication de la demande: 08.09.1993
(73) Titulaire: ALCATEL CABLE, F-92111 Clichy Cédex (FR)
(72) Inventeur: Dumas, Jean-Pierre, F-91360 Villemoisson sur Orge (FR); Jocteur, Robert, F-69004 Lyon (FR)
(74) Mandataire: Laroche, Danièle

(56) Documents cités:
- EP-A- 0 391 742
- PATENT ABSTRACTS OF JAPAN vol. 6, no. 106 (C-108)(984) 16 Juin 1982 & JP-A-57 038 331
- PATENT ABSTRACTS OF JAPAN vol. 9, no. 82 (C-275)(1805) 11 Avril 1985 & JP-A-59 217 632
- PATENT ABSTRACTS OF JAPAN vol. 12, no. 5 (C-467)(2852) 8 Janvier 1988 & JP-A-62 162 633
- PATENT ABSTRACTS OF JAPAN vol. 11, no. 30 (C-400)29 Janvier 1987 & JP-A61 201 633
- Proceedings of 28th International Wire and Cable Symposium, Novembre 1978, Article "High density multicore-fiber cable" par S.Inao et al, pages 370-384

## Description

La présente invention concerne des procédés de fabrication d'un conducteur optique cylindrique multiguides pour les câbles de télécommunications.

Les conducteurs optiques multiguides connus actuellement se présentent généralement sous la forme de rubans contenant 4, 6, 10, 12, 18 fibres optiques individuelles classiques enrobées dans une résine. Chaque fibre individuelle classique comprend un coeur et une gaine optique à base de silice dont le diamètre extérieur est de l'ordre de 40 µm. La gaine optique est elle même entourée d'une couche de silice de diamètre extérieur 125 µm, revêtue de plusieurs couches protectrices organiques de diamètre extérieur total égal à 250 µm environ.

A titre indicatif, les dimensions transversales minimales connues pour un ruban de six fibres sont de l'ordre de 1,65 mm x 0,3 mm.
Compte tenu du grand nombre de rubans entrant dans la structure d'un câble optique, il est tout à fait impératif d'améliorer la compacité de ces rubans.

On connaît par ailleurs une fibre optique à plusieurs coeurs, décrite dans l'article de Ryszard S. Romaniuk et Jan Dorosz "Coupled / non coupled wave transmission in long-length of multicore optical fibres", paru dans le 10^{ème} Meeting EUROPEEN ECOC 84, Stuttgart, p. 202-203.
Au cours du fibrage, le verre du coeur de la préforme passe à travers un diaphragme à plusieurs trous; il s'agit d'un procédé délicat et coûteux aboutissant à une fibre présentant plusieurs coeurs déformés.

On connaît en outre une fibre optique à plusieurs coeurs, décrite dans l'article intitulé "High density multicore-fiber cable", paru dans Proceedings of the 28th International Cable and Wire Symposium - Novembre 1978, pages 370 à 377.

On connait également de JP-A-61/201 633 une fibre optique multicoeurs, ainsi qu'un procédé de fabrication d'une telle fibre, qui consiste à fibrer une préforme constituée d'un bloc cyclindrique dans la masse duquel sont ménagés des canaux internes longitudinaux remplis par des barres cylindriques.

La présente invention a pour but de proposer des procédés de fabrication aisés de conducteur optique multiguides pour les câbles de télécommunications.

La présente invention a pour objet un procédé de fabrication d'un conducteur optique cylindrique multiguides pour câble de télécommunications tel que défini à la revendication 1.

La présente invention a également pour objet un procédé de fabrication d'un conducteur optique cylindrique multiguides pour câble de télécommunications, tel que défini à la revendication 2.

La présente invention a encore pour objet un procédé de fabrication d'un conducteur optique cylindrique multiguides pour câble de télécommunications, tel que défini à la revendication 3.

Les procédés selon l'invention sont beaucoup plus simples à mettre en oeuvre que les procédés connus qui aboutissent à une fibre à plusieurs coeurs. Vis-à-vis du procédé de fabrication d'un ruban à plusieurs fibres, les procédés selon l'invention permettent une grande économie, au niveau de la quantité de silice mise en oeuvre, du temps de fabrication des préformes, du temps de réalisation des revêtements organiques. En outre, ils permettent d'obtenir un guide d'excellente qualité, puisque les fibres sont parfaitement positionnées et peuvent être repérées les unes par rapport aux autres, ce qui est fondamental pour la connectique. Le positionnement des coeurs les uns par rapport aux autres est réalisé avec une erreur inférieure au micromètre.

De manière avantageuse, le coeur de la fibre cylindrique élémentaire a un diamètre de l'ordre de 8 µm à 10 µm, et ladite gaine optique a un diamètre extérieur compris entre 25 µm et 35 µm.

Un rapport de l'ordre de 3 entre le diamètre de gaine et le diamètre de coeur des fibres optiques élémentaires d'un conducteur optique multiguides est suffisant pour éviter la diaphonie. L'emploi d'une silice synthétique sèche est préférable pour qu'il n'y ait pas de migration d'humidité nuisible à la qualité de transmission recherchée.

Un conducteur optique obtenu selon l'invention présente avantageusement sur sa face externe un repère susceptible de différencier les fibres élémentaires qu'il contient.

Quel que soit son mode de réalisation, un conducteur optique obtenu selon l'invention peut être muni d'au moins un revêtement polymère de protection.

Selon l'invention, on réalise par exemple un conducteur optique cylindrique à six fibres, de diamètre extérieur de l'ordre de 125 µm, avec un revêtement organique dont le diamètre extérieur est de l'ordre 250 µm. Si on compare ces dimensions à celle du ruban à six fibres mentionné plus haut, on constate que l'on a réduit l'encombrement par six vis-à-vis des rubans les plus compacts existants.

D'autres caractéristiques et avantages de la présente invention apparaîtront au cours de la description suivante de modes de réalisation donnés à titres illustratif mais nullement limitatif. Dans le dessin annexé:
- La figure 1 est une vue partielle schématique en coupe d'un ruban à six fibres optiques obtenu selon un procédé de l'art antérieur.
- La figure 2 est une vue schématique en coupe d'un conducteur optique à six guides obtenu selon l'invention, dessiné sensiblement à la même échelle que le ruban de la figure 1.
- La figure 3 est une vue schématique en coupe d'une variante de conducteur optique à quatre guides, obtenu selon l'invention.
- Les figures 4A à 4D montrent schématiquement en perspective différents éléments entrant dans la mise en oeuvre d'un des procédés selon l'invention, aboutissant au conducteur de la figure 2 :
   . la figure 4A illustre une préforme élémentaire cylindrique pour une fibre élémentaire cylindrique,
   . la figure 4B illustre un jonc en silice avec ses cannelures,
   . la figure 4C illustre le jonc de la figure 4B avec six préformes élémentaires cylindriques conformes à la figure 4A,
   . la figure 4D montre les éléments de la figure 4C après apport de silice par un procédé de recharge par technique plasma, et définissant ainsi une préforme pour un conducteur optique selon la figure 2.

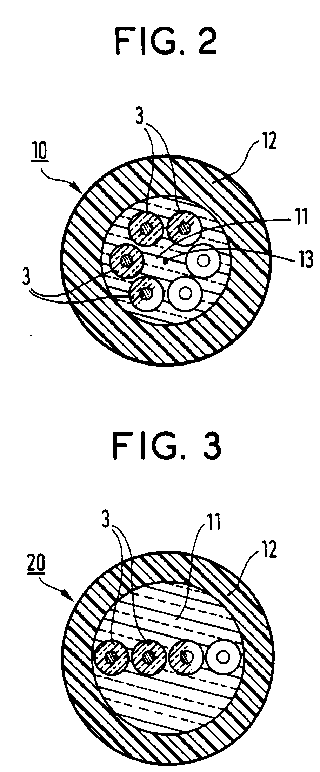

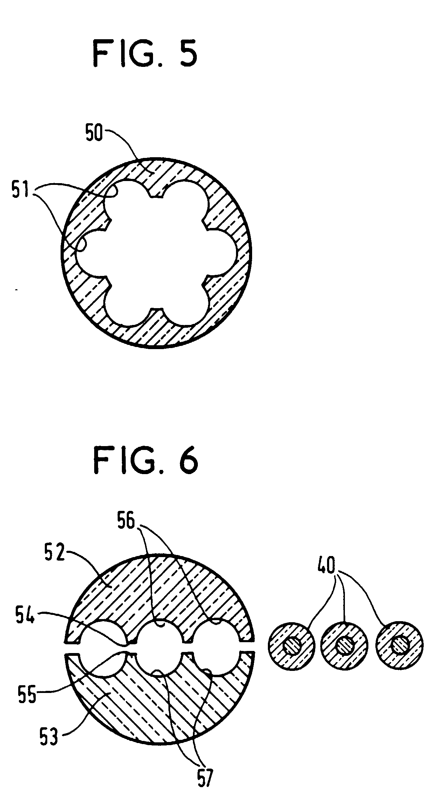

- La figure 5 montre schématiquement en coupe un tube préusiné appartenant à une variante de préforme destinée à la réalisation d'un conducteur optique du type de celui de la figure 2.
- La figure 6 montre schématiquement en coupe une autre variante de préforme destinée à la réalisation d'un conducteur optique du type de celui de la figure 3.

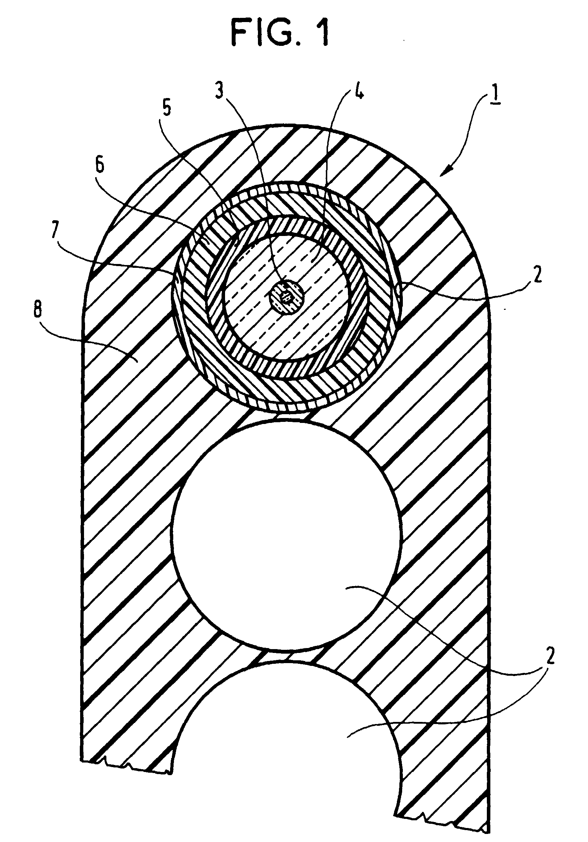

On a illustré sensiblement à la même échelle dans les figures 1 et 2, respectivement un ruban 1 à six fibres obtenu selon l'art antérieur et un conducteur optique 10 obtenu selon l'invention.

Le ruban 1 est constitué de six fibres individuelles classiques 2 comprenant chacune:
- un guide optique 3 constitué d'un coeur et d'une gaine optique de diamètre extérieur sensiblement égal à 40 µm,
- une couche de silice 4 de diamètre extérieur sensiblement égal à 125 µm,
- un revêtement organique primaire 5 de diamètre extérieur de l'ordre de 190 µm,
- un revêtement organique secondaire 6 de diamètre extérieur de l'ordre de 250 µm,
- une couche de résine colorée 7 de diamètre extérieur de l'ordre de 255 µm.

Les six fibres individuelles sont regroupées et enrobées d'une résine 8 de manière à définir le ruban 1. Ce ruban présente en coupe transversale une largeur de l'ordre de 0,37 mm et une longueur de l'ordre de 1,65 mm.

Le conducteur optique 10 de la figure 2 est un cylindre d'axe 13. Il comporte six guides ou fibres élémentaires 3 de diamètre extérieur 35 µm, analogues aux guides 3 de la figure 1, et dont les axes sont situés sur un cylindre d'axe 13.
Ces fibres élémentaires 3 sont liées entre elles par de la silice 11. Elles définissent un ensemble cylindrique de diamètre 125 µm. La silice est de préférence une silice synthétique sèche. L'ensemble est revêtu d'une ou plusieurs couches de protection en polymère, référencées globalement 12 et présentant un diamètre extérieur de l'ordre de 250 µm.

Les figures 1 et 2 dessinées sensiblement à la même échelle font apparaître très clairement le gain obtenu au niveau de la compacité, pour un même nombre de guides optiques.

Le figure 3 montre une variante, moins compacte que celle de la figure 2, mais néanmoins très avantageuse. Le conducteur optique 20 de la figure 3 comporte quatre guides, ou fibres élémentaires 3, liés par de la silice 11, l'ensemble étant protégé par un revêtement en polymère 12.

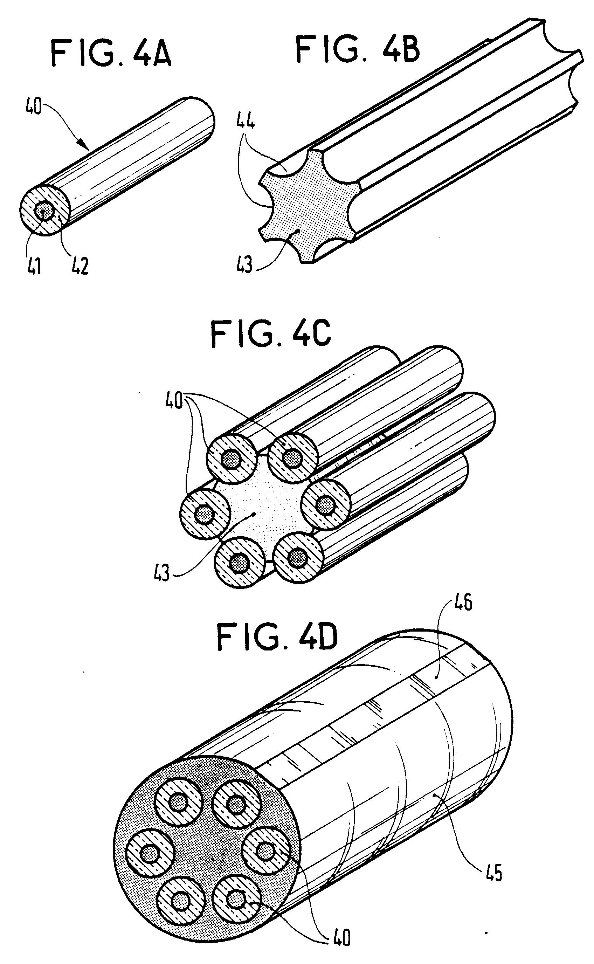

Le conducteur 10 de la figure 2 est avantageusement réalisé par un procédé schématiquement illustré par les figures 4A à 4D.

On voit dans la figure 4A une préforme élémentaire 40 correspondant à une fibre élémentaire 3 avec un verre de coeur 41 et un verre de gaine optique 42. A titre d'exemple une préforme élémentaire 40 a un diamètre de 18 mm et une longueur de 800 mm.

La figure 4B montre un jonc en silice 43 dont la face externe est usinée avec six cannelures 44 de profondeur égale sensiblement à un millimètre, destinées à recevoir six préformes élémentaires 40, comme illustré dans la figure 4C.

En utilisant un procédé habituel, on recharge en silice par technique plasma l'ensemble de la figure 4C de manière à lui conférer une géométrie cylindrique régulière 45, comme illustré dans la figure 4D. A titre d'exemple un procédé de ce genre est décrit dans l'article de R. Dorn et C. Le Sergent "Preform Technologies for Optical Fibers" Electrical Communication. Vol 62, N° 3/4 - 1988, page 238; il est défini par les initiales ALDP : "Axial and Lateral Plasma Deposition".

La référence 46 désigne un méplat que l'on retrouvera sur le conducteur après fibrage et qui servira à repérer l'ordre des fibres élémentaires au moment de la réalisation d'une connexion entre deux conducteurs.

On a ainsi fabriqué une préforme 45 qu'il est possible de fibrer, comme une préforme classique; on peut de cette manière obtenir 300 km de conducteur optique, et donc 1800 km de guide optique.

Selon une variante de mise en oeuvre du procédé précédent, on obtient une préforme analogue à la préforme 45 à partir de l'ensemble de la figure 4C que l'on introduit dans un tube 50 schématisé en coupe dans la figure 5. La paroi interne de ce tube 50 est usinée de manière à présenter six gouttières 51 destinées à recevoir les préformes élémentaires 40. Le positionnement de ces préformes est assuré avec une précision suffisante par le jonc central cannelé 43. Un rétreint effectué sur l'ensemble obtenu aboutit à une préforme directement fibrable.

La figure 6 montre schématiquement comment on peut réaliser aisément une préforme pour la fabrication d'un conducteur du type de celui de la figure 3 (pour trois guides). On usine deux pièces identiques en silice définissant globalement un cylindre et dont les plans diamétraux 54, 55 sont usinés de façon à présenter des cannelures 56, 57 complémentaires pour loger les préformes élémentaires 40.

## Revendications

1. Procédé de fabrication d'un conducteur optique cylindrique multiguides (10) pour câble de télécommunications, ledit conducteur comportant une pluralité de fibres optiques cylindriques élémentaires (3) noyées dans un bloc de silice cylindrique (11) chacune de ces fibres cylindriques élémentaires (3) étant constituée d'un coeur et d'une gaine optique, tous les coeurs desdites fibres élémentaires (3) étant situés régulièrement suivant les génératrices d'un cylindre de même axe (13) que ledit bloc cylindrique (11), ledit procédé comportant les étapes suivantes:
- l'on réalise une préforme (43, 40) à partir d'un jonc cylindrique (43) en silice présentant suivant des directrices de sa face externe une pluralité de cannelures (44) où sont partiellement logées des préformes élémentaires cylindriques (40) constituées chacune d'un verre de coeur (41) entouré d'un verre de gaine optique (42), ladite préforme comprenant autant de préformes élémentaires (40) qu'il y a de fibres élémentaires (3) à former, la géométrie de ladite préforme correspondant à celle dudit conducteur à fabriquer, à une homothétie prés,
- l'on donne à ladite préforme ainsi realisée une forme extérieure régulière cylindrique (45) par apport de grains de silice par le procédé de recharge par technique plasma, et
- l'on réalise une opération de fibrage à partir de l'ensemble ainsi obtenu, de sorte que, à la suite de ladite opération de fibrage, on obtient ledit conducteur (10) dans lequel les fibres élémentaires (3) sont noyées dans ledit bloc de silice (11) (Fig.2 et 4A-4D).

2. Procédé de fabrication d'un conducteur optique cylindrique multiguides (10) pour câble de télécommunications, ledit conducteur comportant une pluralité de fibres optiques cylindriques élémentaires (3) noyées dans un bloc de silice cylindrique (11) chacune de ces fibres cylindriques élementaires (3) étant constituée d'un coeur et d'une gaine optique, tous les coeurs desdites fibres éléméntaires (3) étant situés régulièrement suivant les génératrices d'un cylindre de même axe (13) que ledit bloc cylindrique (11), ledit procédé comportant les étapes suivantes :
- l'on réalise une préforme (43, 40) à partir d'un jonc cylindrique (43) en silice présentant suivant des directrices de sa face externe une pluralité de cannelures (44) où sont partiellement logées des préformes élémentaires cylindriques (40) constituées chacune d'un verre de coeur (41) entouré d'un verre de gaine optique (42), ladite préforme comprenant autant de préformes élémentaires (40) qu'il y a de fibres élémentaires (3) à former, la géométrie de ladite préforme correspondant à celle dudit conducteur à fabriquer, à une homothétie prés,
- l'on donne à ladite préforme (43, 40) une forme extérieure régulière cylindrique en l'introduisant dans un tube (50) préusiné en silice dont la paroi interne (51) épouse sensiblement la configuration dudit jonc (43) muni desdites préformes élémentaires (44),
- l'on effectue un rétreint sur l'ensemble (43, 40, 50) ainsi obtenu, et
- l'on réalise une opération de fibrage à partir de l'ensemble ainsi rétreint, de sorte que, à la suite de ladite opération de fibrage, on obtient ledit conducteur (10) dans lequel les fibres élémentaires (3) sont noyées dans ledit bloc de silice (11) (Fig.2 et 5).

3. Procédé de fabrication d'un conducteur optique cylindrique multiguides (20) pour câble de télécommunications, ledit conducteur comportant une pluralité de fibres optiques cylindriques élémentaires (3) noyées dans un bloc de silice cylindrique (11), chacune de ces fibres cylindriques élémentaires (3) étant constituée d'un coeur et d'une gaine optique, tous les coeurs desdites fibres élémentaires (3) étant parallèles entre eux et coplanaires, ledit procédé comportant les étapes suivantes :
- l'on réalise une préforme à partir de deux demi-cylindres en silice (52, 53) dans le plan diamétral (54, 55) de chacun desquels sont ménagées une pluralité de cannelures complémentaires (56, 57) s'étendant parallélement à l'axe du demi-cylindre correspondant; les deux demi-cylindres étant maintenus en contact l'un de l'autre par leurs plans diamétraux de façon que les cannelures complementaires en vis à vis forment des cavités dans lesquelles sont logées des préformes élémentaires cylindriques (40) constituées chacune d'un verre de coeur (41) entouré d'un verre de gaine optique (42), ladite préforme comprenant autant de préformes élémentaires (40) qu'il y a de fibres élémentaires (3) à former, la géométrie de ladite préforme correspondant à celle dudit conducteur à fabriquer, à une homothétie prés, et
- l'on réalise une opération de fibrage à partir de ladite préforme ainsi réalisée de sorte que, à la suite de ladite opération de fibrage, on obtient ledit conducteur (20) dans lequel les fibres élémentaires (3) sont noyées dans ledit bloc silice (11) (Fig.3 et 6).

4. Procédé selon l'une des revendications 1 à 3, dans lequel les dimensions transversales desdites préformes élémentaires sont choisies de façon à résulter, aprés fibrage, en des fibres élémentaires dont le coeur à un diamètre de l'ordre de 8 µm à 10 µm, et la gaine optique un diamètre extérieur compris entre 25 µm et 35 µm.

5. Procédé selon l'une des revendications 1 à 4, dans lequel on modifie en outre avant fibrage la surface extérieure cylindrique de ladite préforme réalisée, de sorte que le conducteur optique multiguides obtenu aprés fibrage présente sur sa face externe un repère susceptible de différencier les fibres élémentaires qu'il contient.

6. Procédé selon l'une des revendications 1 à 5, dans lequel ledit conducteur optique multiguides obtenu aprés fibrage est muni d'au moins une revêtement polymère de protection (12).

## Patentansprüche

1. Verfahren zur Herstellung eines zylindrischen Mehrfachlichtleiters (10) für Fernmeldekabel, wobei der Leiter mehrere zylindrische elementare Lichtleitfasern (3) in einem zylindrischen Block (11) aus Siliziumoxid eingebettet aufweist und die elementaren zylindrischen Fasern (3) von einem Kern und einer optischen Hülle gebildet werden, wobei alle Kerne der elementaren Lichtleitfasern (3) gleichmäßig entlang von Mantellinien eines Zylinders gleicher Achse (13) wie der zylindrische Block (11) angeordnet sind und wobei das Verfahren folgende Schritte aufweist:
- man stellt einen Rohling (43, 40) ausgehend von einem zylindrischen Stab (43) aus Siliziumoxid her, der entlang von Mantellinien seiner Außenseite mehrere Rillen (44) aufweist, in denen die elementaren zylindrischen Rohlinge (40) bestehend je aus eine Glaskern (41) und einer diesen umgebenden optischen Glashülle (42) teilweise untergebracht sind, wobei der Rohling ebensoviele elementare Rohlinge (40) enthält, wie elementare Lichtleitfasern (3) zu bilden sind, und die Geometrie des Rohlings der des herzustellenden Leiters bis auf einen Maßstabsfaktor entspricht,
- man verleiht dem so gebildeten Rohling eine regelmäßige zylindrische Außenform (45) durch Aufbringen von Siliziumoxidkörnern in einem Plasmaabscheideverfahren,
- dann erfolgt das Ziehen der so erhaltenen Einheit, so daß sich nach dem Ziehen der Leiter (10) ergibt, in dem die elementaren Lichtleiterfasern (3) in den Siliziumoxidblock (11) eingebettet sind (Figur 2 und Figur 4A bis 4D).

2. Verfahren zur Herstellung eines zylindrischen Mehrfachlichtleiters (10) für Fernmeldekabel, wobei der Leiter mehrere zylindrische elementare Lichtleitfasern (3) in einem zylindrischen Block (11) aus Siliziumoxid eingebettet aufweist und die elementaren zylindrischen Fasern (3) von einem Kern und einer optischen Hülle gebildet werden, wobei alle Kerne der elementaren Lichtleitfasern (3) gleichmäßig entlang von Mantellinien eines Zylinders gleicher Achse (13) wie der zylindrische Block (11) angeordnet sind und wobei das Verfahren folgende Schritte aufweist:
- man stellt einen Rohling (43, 40) ausgehend von einem zylindrischen Stab (43) aus Siliziumoxid her, der entlang von Mantellinien seiner Außenseite mehrere Rillen (44) aufweist, in denen die elementaren zylindrischen Rohlinge (40) bestehend je aus eine Glaskern (41) und einer diesen umgebenden optischen Glashülle (42) teilweise untergebracht sind, wobei der Rohling ebensoviele elementare Rohlinge (40) enthält, wie elementare Lichtleitfasern (3) zu bilden sind und die Geometrie des Rohlings der des herzustellenden Leiters bis auf einen Maßstabsfaktor entspricht,
- man verleiht dem Rohling (43, 40) eine regelmäßige zylindrische Außenform, indem man ihn in ein vorgefertigtes Rohr (50) aus Siliziumoxid steckt, dessen Innenwand (51) der Konfiguration des Stabs (43) mit den eingesetzten elementaren Rohlingen (44) im wesentlichen angepaßt ist,
- man schrumpft die so erhaltene Einheit (43, 40, 50),
- dann erfolgt das Ziehen der so geschrumpften Einheit, so daß man nach dem Ziehvorgang den Leiter (10) mit den in den Block aus Siliziumoxid (11) eingebetteten elementaren Lichtleitfasern (3) erhält (Figuren 2 und 5).

3. Verfahren zur Herstellung eines zylindrischen Mehrfachlichtleiters (20) für Fernmeldekabel, wobei der Leiter mehrere zylindrische elementare Lichtleitfasern in einem zylindrischen Block (11) aus Siliziumoxid eingebettet aufweist und jede der elementaren zylindrischen Lichtleitfasern (3) von einem Kern und einer optischen Hülle gebildet wird und wobei alle Kerne der elementaren Lichtleitfasern (3) zueinander parallel und koplanar liegen und das Verfahren folgende Schritte aufweist:
- man stellt einen Rohling ausgehend von zwei Halbzylindern aus Siliziumoxid (52, 53) her, in deren diametraler Ebene (54, 55) je mehrere einander ergänzende Rillen (56, 57) vorgesehen sind, die sich parallel zur Achse des entsprechenden Halbzylinders erstrecken, wobei die beiden Halbzylinder über ihre diametralen Ebenen gegeneinander gehalten werden, so daß die einander ergänzenden gegenüberliegenden Rillen Hohlräume bilden, in denen zylindrische elementare Rohlinge (40) bestehend je aus einem Glaskern (41) und einer diesen umgebenden optischen Glashülle (42) untergebracht sind, wobei der Rohling ebensoviele elementare Rohlinge (40) enthält, wie elementare Lichtleitfasern (3) zu bilden sind, und die Geometrie des Rohlings derjenigen des herzustellenden Lichtleiters bis auf einen Maßstabsfaktor entspricht,
- dann erfolgt das Ziehen des so hergestellten Rohlings, so daß man nach dem Ziehen den Lichtleiter (20) erhält, in dem die elementaren Lichtleitfasern (3) in einem Siliziumblock (11) eingebettet sind (Figuren 3 und 6).

4. Verfahren nach einem der Ansprüche 1 bis 3, bei dem die Querabmessungen der elementaren Rohlinge so gewählt sind, daß sich nach dem Ziehen elementare Lichtleitfasern ergeben, deren Kerndurchmesser etwa 8 bis 10 µm beträgt und deren optische Hülle einen Durchmesser zwischen 25 und 35 µm besitzt.

5. Verfahren nach einem der Ansprüche 1 bis 4, bei dem außerdem vor dem Ziehen die äußere zylindrische Oberfläche des hergestellten Rohlings so verändert wird, daß der nach dem Ziehen erhaltene Mehrfachlichtleiter auf seiner Außenseite eine Marke trägt, die eine Unterscheidung der im Lichtleiter enthaltenen elementaren Fasern erlaubt.

6. Verfahren nach einem der Ansprüche 1 bis 5, bei dem der nach dem Ziehen erhaltene Mehrfachlichtleiter mindestens eine Schutzumhüllung (12) aus Polymermaterial aufweist.

## Claims

1. A method of manufacturing a multi-waveguide cylindrical optical conductor (10) for telecommunications cable, said conductor comprising a plurality of unit cylindrical optical fibers (3) embedded in a cylindrical silica block (11), each of the unit cylindrical fibers (3) being constituted by a core and by cladding, all of the cores of said unit fibers (3) being situated regularly on generator lines of a cylinder having the same axis (13) as said cylindrical block (11), said method comprising the following steps:
a preform (43, 40) is made from a cylindrical silica rod (43) having a plurality of fluting-grooves (44) running along generator lines in its outside surface, with said unit cylindrical preforms (40), each constituted by core glass (41) surrounded by cladding glass (42), being partially received therein, said preform including as many unit preforms (40) as there are unit fibers (3) to be formed, said preform having the same shape (ignoring scale) as said conductor to be manufactured;
said preform made in this way is given a regular cylindrical outside shape (45) by adding grains of silica using the plasma technique covering method; and
a fiber-drawing operation is performed from the assembly thus obtained so that after said fiber-drawing operation said conductor (10) is obtained in which the unit fibers (3) are embedded in said silica block (11) (Figures 2 and 4A-4D).

2. A method of manufacturing a multi-waveguide cylindrical optical conductor (10) for telecommunications cable, said conductor comprising a plurality of unit cylindrical optical fibers (3) embedded in a cylindrical silica block (11), each of the unit cylindrical fibers (3) being constituted by a core and by cladding, all of the cores of said unit fibers (3) being situated regularly on generator lines of a cylinder having the same axis (13) as said cylindrical block (11), said method comprising the following steps:
a preform (43, 40) is made from a cylindrical silica rod (43) having a plurality of fluting-grooves (44) running along generator lines in its outside surface, with said unit cylindrical preforms (40), each constituted by core glass (41) surrounded by cladding glass (42), being partially received therein, said preform including as many unit preforms (40) as there are unit fibers (3) to be formed, said preform having the same shape (ignoring scale) as said conductor to be manufactured;
said preform (43, 40) is given a regular cylindrical outside shape by being inserted in a pre-machined silica tube (50) whose inside wall (51) fits substantially over the shape of said rod (43) provided with said unit preforms (44);
swaging is then preformed on the assembly (43, 40, 50) thus obtained; and
a fiber-drawing operation is performed from the assembly thus swaged so that after said fiber-drawing operation said conductor (10) is obtained in which the unit fibers (3) are embedded in said silica block (11) (Figures 2 and 5).

3. A method of manufacturing a multi-waveguide cylindrical optical conductor (20) for telecommunications cable, said conductor comprising a plurality of unit cylindrical optical fibers (3) embedded in a cylindrical silica block (11), each of the unit cylindrical fibers (3) being constituted by a core and by cladding, all of the cores of said unit fibers (3) being parallel with one another and coplanar, said method comprising the following steps:
a preform is made from two silica semi-cylinders (52, 53) in the diametral plane (54, 55) each having a plurality of complementary fluting-grooves (56, 57) extending parallel to the axis of the corresponding semi-cylinder, the two semi-cylinders being held in contact with each another by their diametral planes so that the facing complementary fluting-grooves form cavities in which unit cylindrical preforms (40), each constituted by core glass (41) surrounded by cladding glass (42), are received, said preform including as many unit preforms (40) as there are unit fibers (3) to be formed, said preform having the same shape (ignoring scale) as said conductor to be manufactured; and
a fiber-drawing operation is performed from said preform made in this way so that after said fiber-drawing operation said conductor (20) is obtained in which the unit fibers (3) are embedded in said silica block (11) (Figures 3 and 6).

4. A method according to any one of claims 1 to 3, in which the transverse dimensions of said unit preforms are selected so that, after fiber-drawing, unit fibers are obtained whose core has a diameter of about 8 µm to 10 µm, and the cladding has an outside diameter lying in the range 25 µm to 35 µm.

5. A method according to any one of claims 1 to 4, in which the cylindrical outside surface of said made preform is further modified before fiber-drawing so that the multi-waveguide optical conductor obtained after fiber-drawing has a marker on its outside face suitable for distinguishing the unit fibers it contains.

6. A method according to any one of claims 1 to 5, in which said multi-waveguide optical conductor obtained after fiber-drawing is provided with at least one protective polymer coating (12).
